# EUROPÄISCHE PATENTANMELDUNG

(11) **EP 1 157 770 A2**
(43) Veröffentlichungstag der Anmeldung: **28.11.2001**
(21) Anmeldenummer: 01250189.6
(22) Anmeldetag: 28.05.2001
(51) Int. Cl.: B23K 1/005

(54) **Laserlötkopf**

(30) Priorität: 26.05.2000 DE 20009886 U
(71) Anmelder: Sikora GmbH, 14532 Stahnsdorf (DE)
(72) Erfinder: Sikora, Ralf, Dipl.-Ing., 13469 Berlin (DE)
(74) Vertreter: Wablat, Wolfgang, Dr.Dr.

(57) **Zusammenfassung**

Bei einem mit einem Handhabungsgerät quer zum Lötspalt schwenkbar und in seiner Längsachse höhenverstellbar verbundenen Laserlötkopf (1) reicht die Laserlichtaustrittsfläche des Lichtleitkabels (2) unter Zwischenschaltung eines Laserrohres (6) bis direkt an den Lötdraht (4) im Bereich des Lötspaltes (3). Die Justierung des Laserstrahls und des Lötdrahts zueinander und zum Lötspalt erfolgt mit einem Justageplättchen (11), in dem der Lötdraht und das Laserrohr in einer bestimmten Lage positioniert sind. Der Lötkopf wird entweder mit dem in den Lötspalt ragenden unteren Teil des Justierplättchens geführt, wobei in diese Fall das Laserlicht von unten auf den Lötdraht strahlen kann und auch die reflektierte Laserlichtenergie zur Erwärmung des Lötspaltbereiches zur Verfügung steht, oder die Führung erfolgt unmittelbar mit dem in den Lötspalt reichenden Lötdraht.

## Beschreibung

Die Erfindung betrifft einen Laserlötkopf zum Verbinden metallischer Bauteile, der mit einem Handhabungsgerät entlang eines durch die Bauteile gebildeten Lötspaltes verfahrbar ist und Justiervorrichtungen zur Einstellung eines dem Lötspalt kontinuierlich zugeführten Lötdrahtes sowie eines über ein Lichtleitkabel geleiteten auf den Lötdraht und die zu verbindenden Bauteile im Bereich der Lötstelle treffenden Laserstrahls aufweist.

Das Laserlöten erfolgt bekanntermaßen mit einem entlang dem Lötspalt verfahrbarem Roboter und einem mit diesem verbundenen Laserlötkopf, über den einerseits der Lötdraht kontinuierlich zugeführt wird und andererseits der über ein Lichtleitkabel zugeführte Laserstrahl mit Hilfe einer optischen Einrichtung von oben auf das Lötdrahtende und auf den betreffenden Lötspaltbereich ausgerichtet wird. Die Zuordnung des Lötdrahtes zum Laserstrahl und zum Lötspalt erfolgt mittels einer in den Laserlötkopf integrierten Justiervorrichtung. Die exakte Einstellung des Lötdrahtes und des Laserstrahls zueinander und zum Lötspalt zur Erzielung guter Nahtqualitäten ist schwierig und zudem vom Geschick des Benutzers abhängig. Das aus dem Lichtleitkabel an dessen stirnseitigem Ende austretende gebündelte Laserlicht wird mit der optischen Einrichtung fokussiert, und in einem auf den Brennpunkt folgenden defokussierten Bereich trifft die Laserenergie mit einem entsprechend größeren Durchmesser von oben auf den Lötdraht und die zu lötenden Bauteile. Ein Teil des auf den Laserdraht auftreffenden Laserlichts wird jedoch von der Drahtoberfläche reflektiert, so daß die Laserenergie nicht in vollem Umfang für den Schmelz- und Erwärmungsprozeß beim Löten zur Verfügung steht.

Beim Laserlöten ist es erforderlich, daß der in der Regel an einen Roboter angeschlossene Lötkopf exakt dem Lötspaltverlauf zwischen den beiden miteinander zu verbindenden Bauteilen folgt, um Nahtqualitäten zu erzielen, die höchsten Anforderungen gerecht werden. Der Positionierungsgenauigkeit des Roboters, dessen Bahnverlauf mit Hilfe von Sensoren überwacht und gesteuert wird, sind jedoch insofern Grenzen gesetzt, als zum einen ein sehr schnelles Löten erforderlich ist, um thermische Spannungen im Nahtbereich aufgrund eines zu hohen Wärmeangebots zu verhindern, andererseits aber der schnellen und genauen Nahtführung durch den Roboter eine oftmals komplizierte Bauteilgeometrie mit schwer zugänglichen Lötspalten oder auch die aufgrund der Justiervorrichtung und der Laseroptik vergleichsweise große und schwere Bauweise des Laserlötkopfes entgegenstehen.

Der Erfindung liegt daher die Aufgabe zugrunde, einen an einen Roboter oder ein anderes Handhabungsgerät angeschlossenen Laserlötkopf in kleiner und leichter Bauform anzugeben, der auch bei in Abhängigkeit von der Bauteilgeometrie kompliziertem oder schwer zugänglichem Lötspalt eine genaue Positionierung des Lötdrahtes und des Laserstrahls zueinander und zum Lötspalt sowie bei hoher Lötgeschwindigkeit und Nahtqualität einen exakten Nahtverlauf gewährleistet.

Erfindungsgemäß wir die Aufgabe mit einem Laserlötkopf gemäß den Merkmalen des Patentanspruches 1 gelöst.

Das Wesen der Erfindung besteht dabei zum einen darin, daß die Austrittsstelle des Laserstrahls aus dem Lichtleitkabel dicht an die Lötstelle, d.h. an den im Lötspaltbereich befindlichen Lötdraht geführt wird. Dadurch entfällt die aufwendige optische Einrichtung zur Fokussierung des Laserstrahls, so daß die Baugröße, das Gewicht und die Kosten gesenkt werden können und insofern auch bei komplizierter Bauteilgeometrie und schwer zugänglichen Nahtverlauf eine einfache, automatische Nahtführung auch bei hohen Lötgeschwindigkeiten erreicht werden kann. Zudem entfallen die durch die Laseroptik und entsprechende Schutzgläser bedingten Leistungsverluste. Für den Lötprozeß steht im Bereich der Lötstelle ein Laserstrahl mit einem Durchmesser zur Verfügung, der bei der auftretenden Divergenz und dem geringen Abstand zwischen Laseraustrittsstelle und Lötstelle dem üblicherweise mit Hilfe der Fokussieroptik beim Laserlöten vorgesehenen Laserstrahldurchmesser entspricht. Erfindungsgemäß erfolgt die Ausrichtung des Laserstrahls und des Lötdrahtes mit Hilfe eines Justageelements, mit dem der Lötdraht und der Laserstrahl in einem bestimmten Verhältnis zueinander positioniert werden und mit dem entweder über das untere freie Ende des Justageelements oder durch den an diesem justierten Lötdraht der Laserlötkopf mechanisch am Lötspalt geführt wird. Der Laserlötkopf ist an dem Handhabungsgerät gelenkig, das heißt, seitlich zu dessen Vorschubrichtung schwenkbar und in seiner Längsachse beweglich, angebracht, so daß das Justageelement bzw. der an diesem positionierte und als Führungselement dienende Lötdraht auch ohne aufwendige Programmierung des Handhabungsgerätes exakt dem Lötspalt folgen kann und Schwankungen im Lötspaltverlauf ausgeglichen werden. Durch die einfache Justierung des Lötdrahtes in dem Justageelement, nämlich mit einer Justieröffnung in einem Justageelement, werden die Bauform und das Gewicht weiter verringert und dynamische Bewegungseinflüsse weiter minimiert.

Aus den Unteransprüchen und der nachfolgenden beispielhaften Beschreibung einer Ausführungsform eines erfindungsgemäß ausgebildeten Laserlötkopfes ergeben sich weitere wichtige Merkmale, aber auch zweckmäßige Ausgestaltungen, Vorteile und Wirkungen der Erfindung.

So besteht ein wichtiges Erfindungsmerkmal beispielsweise in der Verlängerung des Lichtleitkabels durch ein Laserrohr, in das ein Schutzgas eingeblasen werden kann, so daß die Laserlichtaustrittsfläche des Lichtleitkabels weit genug von der Lötstelle entfernt ist und gegen Verschmutzungen aus dem Lötprozeß geschützt ist.

Das Justageelement ist als Plättchen mit einer ersten Justieröffnung für den Lötdraht und einer zweiten Justieröffnung für das Laserrohr ausgebildet. Die Plättchen sind austauschbar und können in bezug auf ihre Lage zum Lötspalt und hinsichtlich der gegenseitigen Zuordnung der Justieröffnungen unterschiedlich ausgebildet sein. Dementsprechend kann das Laserlicht einerseits von oben auf den Lötdraht und die zu verbindenden Bauteile gerichtet sein oder andererseits von unten auf den Lötdraht strahlen. Bei der zuletzt genannten Anordnung wirkt das von der stark reflektierenden Lötdrahtoberfläche abgestrahlte Laserlicht auf den betreffenden Lötspaltbereich und es steht mehr Laserenergie zur Erwärmung des jeweiligen Lötspaltbereiches zur Verfügung.

Ein Ausführungsbeispiel der Erfindung wird anhand der Zeichnung näher erläutert. Es zeigen:
- Fig. 1: eine Seitenansicht eines erfindungsgemäßen Laserlötkopfes in schematischer Darstellung; und
- Fig. 2: eine Vorderansicht eines an einer Halterung des Laserlötkopfes auswechselbar befestigten Justageelements.

Der Laserlötkopf 1 umfaßt ein Lichtleitkabel 2, über das das Laserlicht zum jeweiligen Lötbereich des Lötspaltes 3 und zum Ende des Lötdrahtes 4 geleitet wird, eine Lötdrahtführung 5, über die der Lötdraht 4 zum Schließen des Lötspaltes 3 zwischen zwei Bauteilen 17, 18 während der Vorschubbewegung des Laserlötkopfes 1 kontinuierlich vorgeschoben wird, und ein Schutzgasrohr 8 zur Zuführung von Schutzgas zur Lötstelle. Das Lichtleitkabel 2, die Lötdrahtführung 5 und das Schutzgasrohr 8 sind an einem gemeinsamen ersten Halteelement 9 angebracht. Der Laserlötkopf 1 verfügt außerdem über eine zweite Halterung 10, an deren freiem Ende ein Justageplättchen 11, dessen Funktion weiter unten näher beschrieben wird, lösbar befestigt ist. Die zweite Halterung 10 weist einen von einem Kühlmedium durchströmten Hohlraum 7 auf und ist zum Halteelement 9 hin durch eine elektrische Isolierung 12 abgeschirmt. In dem an das Handhabungsgerät (nicht dargestellt) angeschlossenen oberen Teil des Laserlötkopfes 1 ist dieser in einem Lager 13 und einer Lagerhülse 13a so gelagert, daß er in Längsrichtung entsprechend dem Pfeil A auf und abbewegbar und um eine senkrechte Achse drehbeweglich ist und schließlich senkrecht zur Zeichnungsebene bzw. quer zum Nahtverlauf schwenkbar ist (Pfeil C).

Die Vorschubrichtung des Laserlötkopfes 1 ist mit dem Pfeil B angedeutet, wobei sich das gemeinsame Halteelement 9 für das Lichtleitkabel 2, den Lötdraht 4 und das Schutzgasrohr 8 in Vorschubrichtung B vor der Halterung 10 für das Justageplättchen 11 befindet.

Das Lichtleitkabel 2 endet in geringem Abstand vor der Lötstelle bzw. dem Justageplättchen 11, ist aber durch ein über das Ende des Lichtleitkabels gestecktes Laserrohr 6 bis nahe an das Ende des Lötdrahtes 4 verlängert, wobei auf eine aufwendige optische Fokussiereinrichtung verzichtet wird und damit eine sehr kleine Bauform des Laserlötkopfes 1 erreicht wird. Durch den Fortfall der Laseroptik und zu deren Abschirmung erforderlicher Schutzgläser entfallen auch die dadurch bedingten Leistungsverluste. An das Laserrohr 6 ist das Schutzgasrohr 8 so angeschlossen, daß ein Schutzgas durch das Laserrohr 6 zu dessen Öffnung strömen kann. Durch den durch das Laserrohr 6 bestimmten Abstand zwischen der Austrittsfläche des Laserstrahles aus dem Lichtleitkabel 2 und dem Lötdraht sowie durch den durch das Laserrohr 6 geführten Schutzgasstrom kann die Stirnfläche des Lichtleitkabels 2, aus der das Laserlicht austritt, beim Löten nicht verunreinigt werden. Gleichzeitig wird der Lötprozeß durch das Schutzgas nach außen abgeschirmt. Auf der Grundlage der Beziehung zwischen dem Faserdurchmesser des Lichtleitkabels 2, dem Divergenzwinkel, mit dem das Laserlicht austritt und dem Abstand zwischen der Lichtaustrittsfläche und der Lötstelle wird ein Laserlichtkegel erzeugt, dessen Durchmesser dem des mit einer optischen Einrichtung gemäß dem Stand der Technik fokussiertem und wieder defokussiertem Laserstrahls entspricht und der bei etwa 2 bis 3 mm liegt.

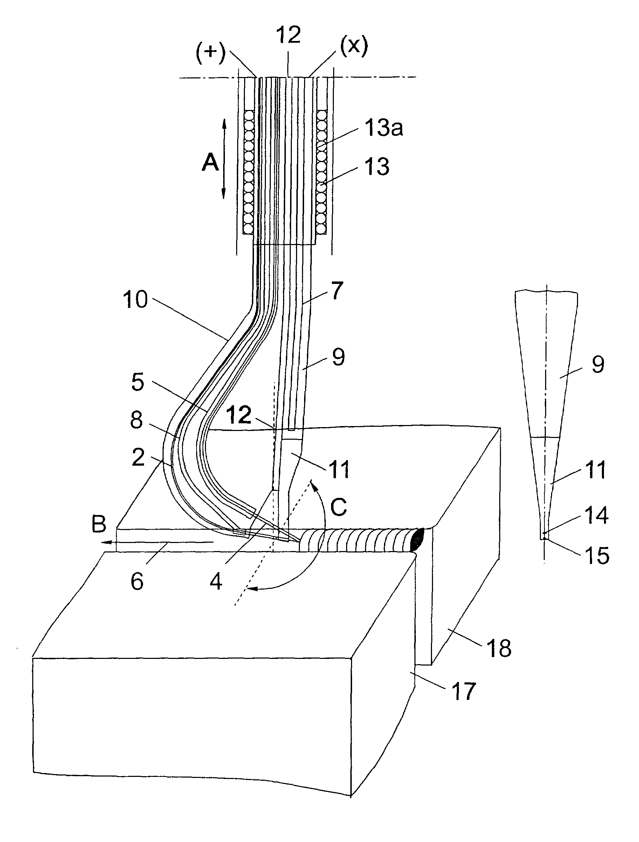

Wie aus den Figuren 1 und 2 ersichtlich ist, sind der Lötdraht 4 und das Laserrohr 6 durch Justieröffnungen 14, 15 in dem Justageplättchen 11 in ihrer Anordnung zueinander sowie zum Lötspalt 3 fixiert. Das Justageplättchen 11 ist lösbar an der Halterung 10 angebracht und kann entsprechend der vorgesehenen Lötnahtausbildung durch ein anderes Justageplättchen 11 mit einer anderen gegenseitigen Zuordnung von Laserstrahl, Lötdraht und Lötspalt ersetzt werden. Da das Laserrohr 6, wie Fig. 1 zeigt, unterhalb des Lötdrahtes 4 angeordnet ist, trifft der Laserstrahl von unten, das heißt, in dem Raum zwischen Lötspalt und Lötdraht, auf die Drahtoberfläche. Das vom Lötdraht 4 reflektierte Laserlicht wird daher in Richtung Lötspalt 3 reflektiert, so daß die reflektierte Laserenergie nicht verlorengeht, sondern für die Erwärmung der beiden zu verbindenden Bauteile 17 und 18 zur Verfügung steht.

Eine zweite, sehr wesentliche Funktion des Justageplättchens 11 besteht aber noch darin, daß der Laserlötkopf 1 mit Hilfe des unteren freien Endes des Justageplättchens 11 in dem Lötspalt 3 mechanisch geführt wird und damit der Laserstrahl bzw. der Laserlichtfleck, wie auch der Lötdraht, seitlich und in der Höhe genau entsprechend dem Lötspaltverlauf justiert wird. Durch die pendelnde und in der Höhe bewegliche Lagerung des Laserlötkopfes 1 kann dieser - unabhängig von der Roboterbewegung - exakt dem Verlauf des Lötspaltes 3 folgen, so daß auch diesbezüglich eine hohe Qualität der Lötnaht 16 gewährleistet ist. Auf eine aufwendige Programmierung der Bewegungsbahn des Roboters kann unter diesen Bedingungen verzichtet werden.

Es ist jedoch auch möglich, aber in der Zeichnung nicht dargestellt, das Justageplättchen so auszubilden und anzuordnen, daß es nicht mit dem Lötspalt 3 in Kontakt kommt und statt dessen der in den Lötspalt eintauchende Lötdraht die Führung des Laserlötkopfes 1 übernimmt, wobei aber die justierte Zuordnung von Laserlicht und Lötdraht zueinander und zum Lötspalt aufgrund der auch in diesem Justierplättchen vorgesehenen ersten und zweiten Justieröffnung weiterhin gewährleistet ist.

Im Falle der Führung des Laserlötkopfes 1 mit Hilfe des in den Lötspalt eintauchenden Lötdrahtes ist aber das Lichtleitkabel so angeordnet, daß der Laserstrahl von oben auf den Lötdraht trifft.

In Fig. 1 ist mit (+) der Plus-Anschluß zur Stromzufuhr zum Lötdraht und damit zu dessen Erwärmung und mit (x) der Masseanschluß zur Rückführung des Stroms über die Halterung 10 gekennzeichnet. In diesem Fall ist im Laserlötkopf eine elektrische Isolierung 12 vorgesehen, die jedoch nicht erforderlich ist, wenn der Masseanschluß an den zu verlötenden Bauteilen 17, 18 erfolgt.

### Bezugszeichenliste

- 1: Laserlötkopf
- 2: Lichtleitkabel (Laserfaser)
- 3: Lötspalt
- 4: Lötdraht
- 5: Lötdrahtführung
- 6: Laserrohr
- 7: Hohlraum in 9
- 8: Schutzgasrohr
- 9: (erstes Halteelement)
- 10: (zweite Halterung)
- 11: Justageplättchen
- 12: elektrische Isolierung
- 13: Lager von 1
- 13a: Lagerhülse
- 14: erste Justieröffnung (für Lötdraht)
- 15: zweite Justieröffnung (für Laserrohr)
- 16: Lötnaht
- 17,18: Bauteile

- Pfeil C: Schwenkbewegung des Laserlötkopfes
- Pfeil A: Auf- und Abbeweglichkeit des Laserlötkopfes 1
- Pfeil B: Vorschubrichtung des Laserlötkopfes
- (+): Plus-Anschluß
- (x): Masse-Anschluß

## Patentansprüche

1. Laserlötkopf zum Verbinden metallischer Bauteile, der mit einem Handhabungsgerät entlang eines durch die Bauteile gebildeten Lötspaltes verfahrbar ist und Justiervorrichtungen zur Einstellung eines dem Lötspalt kontinuierlich zugeführten Lötdrahtes sowie eines über ein Lichtleitkabel geleiteten, auf dem Lötdraht und die zu verbindenden Bauteile im Bereich der Lötstelle treffenden Laserstrahls aufweist, **dadurch gekennzeichnet, daß** der aus dem nahe an die Lötstelle geführten Lichtleitkabel (2) austretende Laserstrahl und der Lötdraht (4) durch ein an dem Laserlötkopf (1) gehaltenes Justageelement (11) mechanisch zueinander und zum Lötspalt (3) fixiert sind und der Laserlötkopf (1), der mit dem Handhabungsgerät gelenkig verbunden ist, durch das Justageelement (11) oder durch den an diesem justierten Lötdraht (4) mechanisch am Lötspalt (3) geführt ist.

2. Laserlötkopf nach Anspruch 1, **dadurch gekennzeichnet, daß** die Laseraustrittsfläche des Lichtleitkabels (2) zu deren Schutz vor Verschmutzung und zur Abschirmung des Lötprozesses mit einem Schutzgasstrom beaufschlagt ist.

3. Laserlötkopf nach Anspruch 1, **dadurch gekennzeichnet, daß** an das Ende des Lichtleitkabels (2) ein den Laserstrahl umhüllendes und weiterführendes Laserrohr (6) angebracht ist, das an dem Justageelement (11) justiert ist.

4. Laserlötkopf nach einem der Ansprüche 1 bis 3, **dadurch gekennzeichnet, daß** das Laserrohr (6) an ein Schutzgasrohr (8) angeschlossen ist.

5. Laserlötkopf nach einem der Ansprüche 1 bis 4, **dadurch gekennzeichnet, daß** das Justageelement (11) ein an einer im Laserlötkopf (1) befestigten Halterung (10) auswechselbar befestigtes Justageplättchen (11) ist, das eine erste Justieröffnung (14) zur Fixierung des Lötdrahtes (4) und eine zweite Justieröffnung (15) zur Fixierung des Lichtleitkabels (3) oder des Laserrohres (6) und zur Ausrichtung des Laserstrahls auf den Lötdraht (4) und den betreffenden Lötbereich aufweist.

6. Laserlötkopf nach einem der Ansprüche 1 bis 5, **dadurch gekennzeichnet, daß** eine Mehrzahl an der Halterung (10) lösbar befestigbarer Justageplättchen (11) mit entsprechend der gewünschten Zuordnung zwischen Laserstrahl und Lötdraht jeweils unterschiedlich angeordneter erster und zweiter Justieröffnung (14, 15) vorgesehen ist.

7. Laserlötkopf nach einem der Ansprüche 1 bis 6, **dadurch gekennzeichnet, daß** das Justierplättchen (11) im wesentlichen senkrecht zum Lötspalt (3) gerichtet ist und die erste Justieröffnung (14) für den Lötdraht (4) oberhalb der zweiten Justieröffnung (15) für den Laserstrahl liegt, wobei das Laserlicht von unten auf den über dem Lötspalt (3) befindlichen Lötdraht (4) gerichtet ist und das untere freie Ende des Justageplättchens (11) in oder an dem durch die zu verbindenden Bauteile gebildeten Lötspalt (3) mechanisch geführt ist.

8. Laserlötkopf nach einem der Ansprüche 1 bis 6, **dadurch gekennzeichnet, daß** das Justageplättchen (11) und die ersten und zweiten Justieröffnungen (14, 15) so angeordnet sind, daß der Laserstrahl von oben auf den Lötdraht (4) gerichtet ist und der noch im festen Zustand in den Lötspalt (3) ragende und an dem Justageplättchen (11) justierte Lötdraht (4) den Laserlötkopf (1) mechanisch führt.

9. Laserlötkopf nach Anspruch 5, **dadurch gekennzeichnet, daß** die Halterung (10) für das Justageplättchen (11) einen Hohlraum (7) für ein Kühlmittel aufweist.

10. Laserlötkopf nach einem der Ansprüche 1 bis 9, **gekennzeichnet durch** eine Stromzufuhr zum Lötdraht (4) zu deren Erwärmung.

11. Laserlötkopf nach Anspruch 10, **dadurch gekennzeichnet, daß** die Halterung (10) als Rückleiter für den Strom dient und durch eine Isolierung (12) elektrisch abgeschirmt ist.

12. Laserlötkopf nach Anspruch 10, **dadurch gekennzeichnet, daß** die zu verlötenden Bauteile (17, 18) als Rückleiter für den Strom dienen.

13. Laserlötkopf nach einem der Ansprüche 1 bis 12, **gekennzeichnet durch** eine kompakte, gebündelte Anordnung der Zuführungsmittel für Laserlicht, Schutzgas, Lötdraht, Strom und Kühlmedium.

14. Laserlötkopf nach Anspruch 1 und 13, **dadurch gekennzeichnet, daß** die Zuführungsmittel in einer Lagerhülse (13a) zusammengefaßt sind, die in einem Lager (13) um die Längsachse drehbar und in Richtung der Längsachse bewegbar ist und die an dem Handhabungsgerät seitlich schwenkbar, d.h. senkrecht zum Lötspaltverlauf pendelnd, gehalten ist.

15. Laserlötkopf nach einem der Ansprüche 1 bis 14, **dadurch gekennzeichnet, daß** ein in den Lötspalt (3) eingreifender vorlaufender Führungsstift zur Orientierungsführung vorgesehen ist.
